# EUROPEAN PATENT APPLICATION

(11) **EP 1 744 110 A2**
(43) Date of publication of application: **17.01.2007**
(21) Application number: 06014395.5
(22) Date of filing: 11.07.2006
(51) Int. Cl.: F25B 27/02, F25B 13/00

(54) **Cogeneration system**

(30) Priority: 12.07.2005 KR 20050062770
(71) Applicant: LG ELECTRONICS INC., Seoul 150-010 (KR)
(72) Inventor: Cho, Eun Jun, Sosa-ku Buchun-si Kyunggi-do 422-060 (KR); Ha, Sim Bok, Kyungki-do 423-010 (KR); Chung, Baik Young, -dong Kyeyang-ku Inchun-si 407-710 (KR); Kim, Cheol Min, Youngdeungpo-ku Seoul 150-054 (KR); Chang, Se Dong, Kwangmyung-si Kyungki-do 423-060 (KR)
(74) Representative: Urner, Peter

(57) **Abstract**

A cogeneration system has an advantage that a cogeneration section is divided into a main unit (60) and a sub unit (80), and an engine (62) and a generator (61) are included in the main unit (60), to thus enable the main unit and the sub unit to be installed at different locations, so that the main unit can be installed on the ground floor or basement of a building to thus minimize building vibrations or noises generated by a load, and the sub unit can be installed near to an air conditioner to thus minimize the length of a refrigerant passage, thereby reducing the installation cost and the flow passage resistance.

## Description

### BACKGROUND OF THE INVENTION

### 1. Field of the Invention

The present invention relates to a cogeneration system, and more particularly to, a cogeneration system, in which a cogeneration section includes a main unit and a sub unit, so that the sub unit can be installed near to an air conditioner to thus lessen the length of a refrigerant passage connecting the sub unit and the air conditioner, thereby reducing the installation cost and the flow passage resistance.

### 2. Description of the Background Art

In general, a cogeneration system is a system that can produce both electricity and heat from a single energy source.

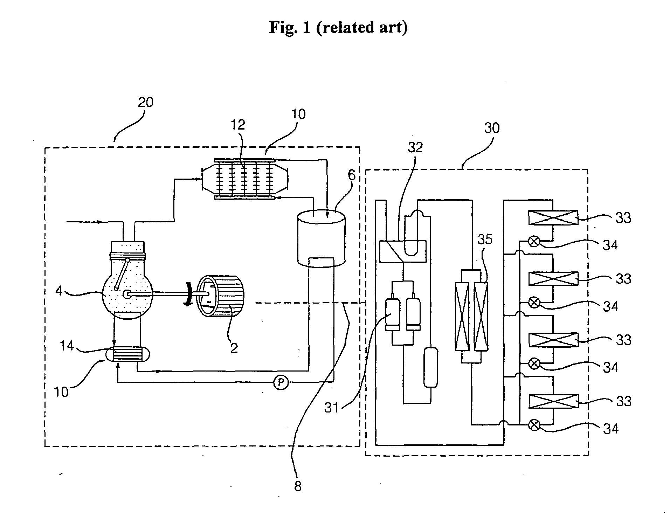

FIG. 1 is a block diagram schematically showing a cogeneration system in accordance with the prior art.

The cogeneration system in accordance with the prior art includes, as shown in FIG. 1, a cogeneration section 20 comprised of a generator 1 for producing electricity, an engine 4 for driving the generator 1, a waste heat recovery unit 10 for recovering waste heat generated by the engine 4, and a heat demand site 6, such as a heat storage tank, where the waste heat of the waste heat recovery unit 10 is used, and a heat pump type air conditioner 30 driven by the electricity produced by the generator 2.

The generator 2 and the heat pump type air conditioner 30 are connected to a power line 8 for supplying electricity.

The waste heat recovery unit 10 includes an exhaust gas heat exchanger 12 for removing heat from exhaust gas discharged from the engine 4 and a cooling water heat exchanger 14 for removing heat from cooling water that has cooled the engine 4.

The heat pump type air conditioner 30 includes a compressor 31, a four-way valve 32, an indoor heat exchanger 33, an expansion valve 34, and an outdoor heat exchanger 35.

In the cogeneration system thus constructed, when the engine 4 is operated, the generator 2 produces electricity by the driving force of the engine 4.

The electricity produced by the generator 2 is supplied to the air conditioner 30 via the power line 8, to thus operate the air conditioner 30.

The waste heat generated by the engine 4 is recovered by the waste heat recovery equipment 8, and used in the heat demanding site 10.

When the engine 4 is stopped, the generator 2 is also stopped, to thus stop the power supply to the air conditioner 30 from the generator 2.

However, the cogeneration system in accordance with the prior art has a problem in that only the electricity produced by the generator 2 is supplied to the air conditioner 30, and the waste heat recovered by the engine 4 is only utilized for hot water supply, warm water, or the like in the heat demanding site, so that it is impossible to maximize the efficiency of the system. Besides, there is a problem that the weight of the cogeneration section 20 is so large that there are restrictions on installation locations.

### SUMMARY OF THE INVENTION

The present invention has been made in an effort to solve the above prior art problem, and provide a cogeneration system, which is constructed such that both electricity and waste heat of a cogeneration section can be utilized in a heat pump type air conditioner, and restrictions on installation locations of the cogeneration section can be overcome, thereby improving the system efficiency.

To achieve these and other advantages and in accordance with the purpose of the present invention, as embodied and broadly described herein, there is provided a cogeneration system, including: an air conditioner having an indoor unit and an outdoor unit; a main unit including a driving source for generating heat and a waste heat recovery device for recovering waste heat of the driving source; and a sub unit installed between the air conditioner and the main unit, and including a waste heat supplying heat exchanger for supplying the heat recovered by the waste heat recovery device to the air conditioner.

The main unit and the sub unit are connected by a heat medium passage through which a heat medium transferring heat to the waste heat supplying heat exchanger from the waste heat recovery device can circulate.

The heat medium passage includes a main unit heat medium passage installed so as to pass through the waste heat recovery device within the main unit, a sub unit heat medium passage installed so as to pass through the waste heat supplying heat exchanger within the sub unit, and a unit connecting passage connecting the main unit heat medium passage and the sub unit heat medium passage.

The sub unit and the air conditioner are connected by a refrigerant passage through which a refrigerant transferring heat to the outdoor unit from the waste heat supplying heat exchanger can circulate.

The refrigerant passage includes a sub unit refrigerant passage installed so as to pass through the waste heat supplying heat exchanger within the sub unit, an air conditioner refrigerant passage installed so that the refrigerant can circulate through the air conditioner, and an air conditioner connecting passage connecting the sub unit refrigerant passage and the air conditioner refrigerant passage.

The sub unit refrigerant passage has a bypass passage for allowing the refrigerant to bypass the waste heat supplying heat exchanger during the cooling operation of the air conditioner, and the bypass passage has a first check valve for preventing reverse flow of the refrigerant.

The sub unit refrigerant passage has a second check valve for preventing reverse flow of the refrigerant that has passed through the waste heat supplying heat exchanger.

The sub unit refrigerant passage has an on-off valve for preventing the refrigerant from being introduced into the waste heat supplying heat exchanger during the cooling operation of the air conditioner.

The sub unit has a radiator for radiating the heat recovered by the waste heat recovery device.

The main unit further includes a main unit controller for controlling the engine, and the sub unit further includes a sub unit controller for controlling the passages of the heat medium and the refrigerant circulating in the sub unit.

The cogeneration system in accordance with the invention has an advantage that a cogeneration section is divided into a main unit and a sub unit, and an engine and a generator are included in the main unit, to thus enable the main unit and the sub unit to be installed at different locations, so that the main unit can be installed on the ground floor or basement of a building to thus minimize building vibrations or noises generated by a load, and the sub unit can be installed near to an air conditioner to thus minimize the length of a refrigerant passage, thereby reducing the installation cost and the flow passage resistance.

Additionally, the sub unit can be installed on the roof, so that the radiation effect of a radiator installed on the sub unit can be enhanced.

Additionally, the waste heat recovered from the engine is supplied to the air conditioner through the waste heat supplying heat exchanger, so that the heating performance and efficiency can be maximized.

Additionally, in the case that the air conditioner is in a heating operation and the outdoor temperature is lower than a set temperature, the refrigerant is evaporated by the waste heat supplying heat exchanger, so that a constant heating performance can be obtained regardless of the outdoor temperature, and frost formation on an outdoor heat exchanger can be prevented.

### BRIEF DESCRIPTION OF THE DRAWINGS

In the drawings:
FIG. 1 is a block diagram schematically showing a cogeneration system in accordance with the prior art;
FIG. 2a is a schematic view showing a cogeneration section when a cogeneration system in accordance with the present invention is in a cooling operation;
FIG. 2b is a schematic view showing an air conditioner when the cogeneration system in accordance with the present invention is in the cooling operation;
FIG. 3 is a schematic view showing when the cogeneration system in accordance with the present invention is in a heating operation and the outdoor temperature is lower than a set temperature; and
FIG. 4 is a schematic view showing when the cogeneration system in accordance with the present invention is in the heating operation and the outdoor temperature is higher than a set temperature.

### DETAILED DESCRIPTION OF THE PREFERRED EMBODIMENTS

Hereinafter, an exemplary embodiment of a cogeneration system in accordance with the invention will be described with reference to the accompanying drawings.

There may be a plurality of exemplary embodiments of the cogeneration system in accordance with the invention, but the most preferred embodiment will be described hereinafter.

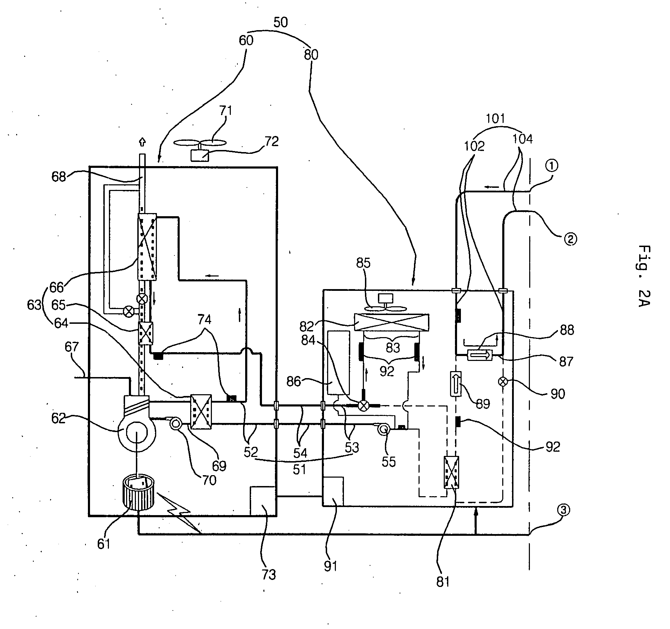

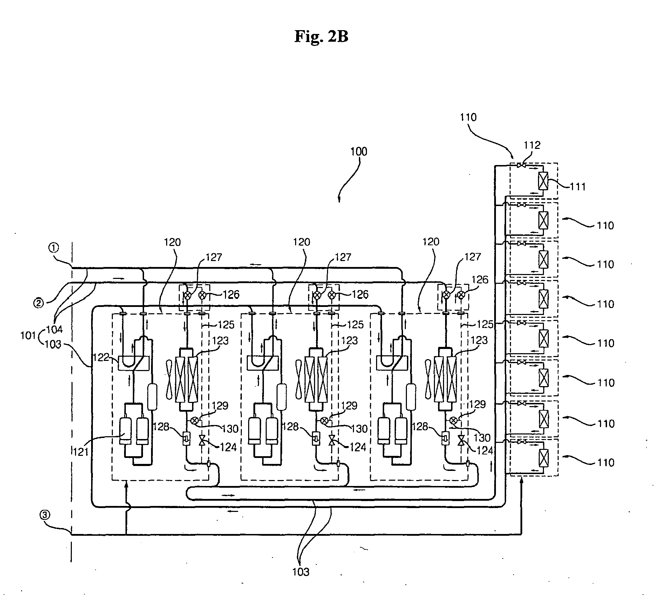

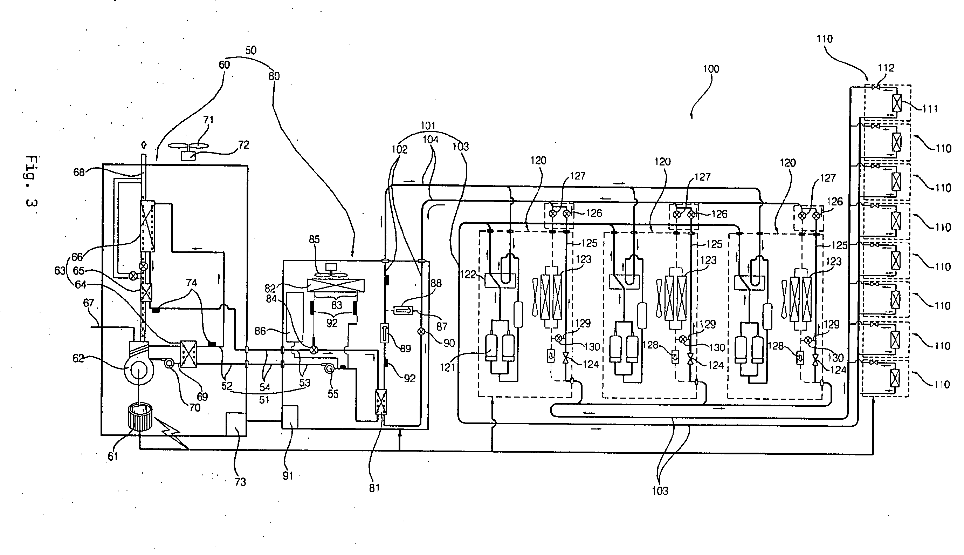

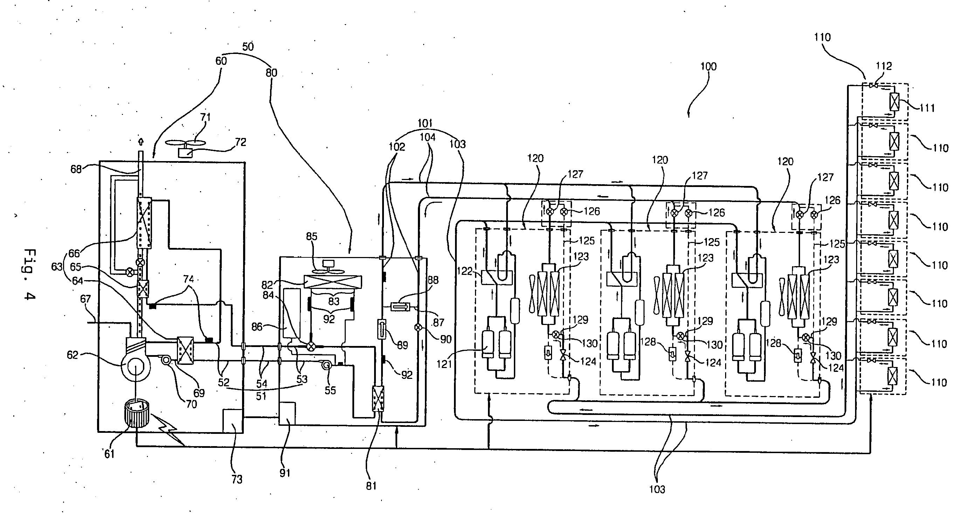

FIG. 2a is a schematic view showing a cogeneration section when a cogeneration system in accordance with the present invention is in a cooling operation. FIG. 2b is a schematic view showing an air conditioner when the cogeneration system in accordance with the present invention is in the cooling operation. FIG. 3 is a schematic view showing when the cogeneration system in accordance with the present invention is in a heating operation and the outdoor temperature is lower than a set temperature. FIG. 4 is a schematic view showing when the cogeneration system in accordance with the present invention is in the heating operation and the out door temperature is higher than a set temperature.

The cogeneration system in accordance with an exemplary embodiment of the invention includes a cogeneration section 50 for producing electricity and heat and an air conditioner 100 operated by the produced electricity and heat supplied from the cogeneration section 50.

The cogeneration section 50 includes a main unit 60 installed on the basement or ground floor of a building and a sub unit 80 installed near the air conditioner 100, separately from the main unit 60.

The air conditioner100 includes an indoor unit 110 and an outdoor unit 120. The description of the outdoor unit 120 and the sub unit 80 is limited to an explanation of those installed on the roof of a building.

The main unit 60 includes a generator 61 for producing electricity, a driving source for driving the generator 61 and generating heat, and a waste heat recovery device 63 for recovering waste heat of the driving source.

The sub unit 80 includes a waste heat supplying heat exchanger 81 for supplying the heat recovered by the waste heat recovery device 63 to the air conditioner 100 and a radiator for radiating heat the recovered by the waste heat recovery device 63.

The sub unit 80 is installed between the air conditioner 100 and the main unit 60.

The generator 61 is either an AC generator or a DC generator, the rotor of which is connected to an output shaft of the driving source to produce electricity when the output shaft rotates.

The driving source may comprise a fuel cell, or an engine 62 operated using fossil fuels, such as gas or oil, and the description thereof is limited to an explanation of the engine 62.

The engine 62 has a fuel injection port 67 through which fuels, such as gas or oil, pass and an exhaust port 68 through which exhaust gas discharged from the engine 62 passes.

The waste heat recovery device 63 includes a cooling water heat exchanger 64 connected to the engine 62 through a cooling water passage 69, for recovering the heat of the cooling water of the engine 62, a first exhaust gas heat exchanger 65 installed on the exhaust port 68 so as to recover the exhaust gas heat discharged from the engine 62, and a second exhaust gas heat exchanger 66 for recovering remaining waste heat of the exhaust gas from which waste heat has been removed in the first exhaust gas heat exchanger 65.

The cooling water passage 69 has a cooling water circulation pump 70 for circulating cooling water.

The main unit 60 has a ventilation fan 71 for blowing outdoor air into the main unit 60 and a motor 72 for driving the ventilation fan 71.

The main unit 60 and the sub unit 80 are connected by a heat medium passage 51 through which a heat medium transferring heat to the waste heat supplying heat exchanger 81 from the waste heat recovery device 63 can circulate.

The heat medium passage 51 includes a main unit heat medium passage 52 installed so as to pass through the waste heat recovery device 63 within the main unit 60, a sub unit heat medium passage 53 installed so as to pass through the waste heat supplying heat exchanger 81 within the sub unit 80, and a unit connecting passage 54 connecting the main unit heat medium passage 52 and the sub unit heat medium passage 53.

The main unit heat medium passage 52 connects the cooling heat exchanger 64, the second exhaust gas heat exchanger 66, and the first exhaust gas heat exchanger 65.

On the sub unit heat medium passage 53, the radiator is connected to the inlet side of the waste heat supplying heat exchanger 81 by a radiation passage 83.

A three-way valve 84 is installed at the connecting portion of the sub unit heat medium passage 53 and the radiation passage 83.

The radiator is a radiation heat exchanger 82 which radiates the heat recovered by the waste heat recovery device 63 to the outside, and the radiation heat exchanger 82 has a radiation fan 85 for blowing outdoor air to the radiation heat exchanger.

To the sub unit 80, installed are a heat medium circulation pump 54 for circulating the heat medium of the sub unit heat medium passage 53 and an expansion tank 86 for containing gas generated from the sub unit heat medium passage 53.

The expansion tank 86 is installed at the inlet side of the heat medium circulation pump 54.

The sub unit 80 and the air conditioner 100 are connected by a refrigerant passage 101 through which a refrigerant transferring heat to the outdoor unit 120 from the waste heat supplying heat exchanger 81 can circulate.

The refrigerant passage 101 includes a sub unit refrigerant passage 102 installed so as to pass through the waste heat supplying heat exchanger 81 within the sub unit 80, an air conditioner refrigerant passage 103 installed so that the refrigerant can circulate through the air conditioner 100, and an air conditioner connecting passage 104 connecting the sub unit refrigerant passage 102 and the air conditioner refrigerant passage 103.

The sub unit refrigerant passage 102 has a bypass passage 87 for allowing the refrigerant to bypass the waste heat supplying heat exchanger 81 during the cooling operation of the air conditioner 100.

The bypass passage 87 has a first check valve 88 for preventing reverse flow of the refrigerant.

The sub unit refrigerant passage 102 has a second check valve 89 for preventing reverse flow of the refrigerant that has passed through the waste heat supplying heat exchanger 82.

The second check valve 89 is installed at the outlet side of the waste heat supplying heat exchanger 81.

The sub unit refrigerant passage 102 has an on-off valve 90 for preventing the refrigerant from being introduced into the waste heat supplying heat exchanger 81 during the cooling operation of the air conditioner 100.

The on-off valve 90 is installed at the inlet side of the waste heat supplying heat exchanger 81.

The main unit 60 further includes a main unit controller 73 for controlling the engine 62. The sub unit 80 further includes a sub unit controller 91 for controlling the passages of the heat medium and the refrigerant circulating in the sub unit 80.

It is preferred that the main unit controller 73 and the sub unit controller 91 are connected for enabling communication therebetween.

The main unit 60 further includes a main unit temperature sensor 74 which senses a temperature of the heat medium circulating through the waste heat recovery device 63 and transmits a sensing signal to the main unit controller 73. The sub unit 80 further includes a main unit temperature sensor which senses a temperature of the refrigerant circulating through the waste heat recovery device 63 and transmits a sensing signal to the sub unit controller 91.

The air conditioner 100 is a heat pump type air conditioner. The outdoor unit 120 includes a compressor 121, a four-way valve 122, an outdoor heat exchanger 123, and an outdoor expansion device 124, and the indoor unit 110 includes an indoor heat exchanger 111 and an indoor expansion device 112.

The outdoor unit 120 and the indoor unit 110 may be either singular or plural, and the description thereof will be made with respect to a case where they are in plural.

Within the outdoor unit 120, an outdoor heat exchanger bypass passage 125 is installed for allowing the refrigerant passed through the indoor unit 110 to bypass the outdoor heat exchanger 123 during a heating operation of the air conditioner 100.

On the outdoor heat exchanger bypass passage 125, a first heating on-off valve 126 opened during the heating operation of the air conditioner 100 and the outdoor expansion device 124 are installed.

On the air conditioner connecting passage 104, a cooling on-off valve 127, which is opened so as to supply the refrigerant to the outdoor heat exchanger 123 during the cooling operation of the air conditioner 100, is installed.

A third check valve 128 is installed between the outlet side of the outdoor heat exchanger 123 and the air conditioner refrigerant passage 103 so as to prevent reverse flow of the refrigerant passed through the outdoor heat exchanger 123 during the cooling operation of the air conditioner 100.

The outdoor heat exchanger 123 is connected to the outdoor heat exchanger bypass passage 125 by a connecting passage 129 so that the refrigerant passed through the outdoor expansion device 124 is introduced into the outdoor heat exchanger 123 when the air conditioner is in a heating operation and the outdoor temperature is lower than a set temperature.

A second heating on-off valve 130 for opening and closing the connecting passage 129 is installed on the connecting passage 129.

Here, the cooling on-off valve 127 and the first heating on-off valve 126 can be installed at the inside or outside of the outdoor unit 120, but the description thereof will be made hereinafter with respect to a case where they are installed at the outside of outdoor unit 120.

The operation of the thus-constructed cogeneration system in accordance with the exemplary embodiment of the present invention will be described.

First, when the engine 62 is driven, the generator 61 produces electricity, and, as shown in FIGS. 2a to 4, the produced electricity is supplied to the sub unit 80, the air conditioner 100 and so on.

Exhaust gas waste heat and cooling water waste heat of the engine 62 are recovered by the cooling water heat exchanger 64, the first exhaust gas heat exchanger 65, and the second exhaust gas heat exchanger 66.

In a cooling operation of the air conditioner 100, as shown in FIGS. 2a and 2b, a heat medium on the main unit heat medium passage 52 recovers the waste heat of the engine 62 while sequentially circulating through the cooling water heat exchanger 64, the second exhaust gas heat exchanger 66, and the first exhaust gas heat exchanger 65.

The heat medium that has recovered the waste heat is introduced into the sub unit 80 through the unit connecting passage 54.

At this time, since the air conditioner 100 is in the cooling operation, the three-way valve 84 opens the radiation passage 83, so that the heat medium introduced into the sub unit 80 is emitted to the air through the radiation heat exchanger 82.

And, in the air conditioner 100, the four-way valve 122 is switched to a cooling mode.

Accordingly, the refrigerant compressed in the compressor 122 escapes the outdoor unit 120 through the four-way valve 122, and is introduced into the sub unit 80 through the air conditioner connecting passage 104 and the sub unit refrigerant passage 102.

The on-off valve 90 in the sub unit 80 is turned off, and the refrigerant introduced into the sub unit refrigerant passage 102 passes through the bypass passage 87 and then enters the outdoor unit 120.

That is, the waste heat supplying heat exchanger 81 is bypassed.

Within the outdoor unit 120, the cooling valve 127 is turned on, and the first and second heating on-off valves 126 and 129 are turned off, thus the refrigerant introduced into the outdoor unit 120 passes through the outdoor heat exchanger 123 and then is introduced into the indoor unit 110 through the air conditioner refrigerant passage 103.

That is, in the cooling operation of the air conditioner 100, the refrigerant bypasses the waste heat supplying heat exchanger 81 and is introduced into the outdoor heat exchanger 123, so that the outdoor heat exchanger 123 serves as a condenser.

The refrigerant passed through the outdoor heat exchanger 123 passes through the air conditioner refrigerant passage 103, the indoor expansion device 122, and the indoor heat exchanger 111.

Therefore, the indoor heat exchanger 111 serves as an evaporator, and the indoor temperatures becomes lower.

On the other hand, if the air conditioner 100 is in a heating operation and the outdoor temperature is lower than a set temperature, as shown in FIG. 3, the refrigerant introduced into the sub unit 80 through the unit connecting passage 54 through the main unit 60 passes through the waste heat supplying heat exchanger 81.

In the air conditioner 100, the four-way valve 122 is switched to a heating mode, thus the refrigerant compressed in the compressor 121 is re-introduced into the outdoor unit 120 through the four-way valve 122, the air conditioner connecting passage 103, the indoor heat exchanger 111, the indoor expansion device 112, and the air conditioner connecting passage 103.

At this time, the first heating on-off valve 126 is turned on, and the second heating on-off valve 130 and the cooling on-off valve 127 are turned off, thus the refrigerant re-introduced into the outdoor unit 120 bypasses the outdoor heat exchanger 123 as it passes through the outdoor heat exchanger bypass passage 125.

The refrigerant that has bypassed the outdoor heat exchanger 123 is introduced into the sub unit 80 through the air conditioner connecting passage 104.

At this time, in the sub unit 80, the on-off valve 90 is turned on, so the refrigerant introduced into the sub unit 80 passes through the waste heat supplying heat exchanger 81 and then enters the outdoor unit 120.

That is, if the air conditioner 100 is in a heating operation and the outdoor temperature is lower than a set temperature, the indoor heat exchanger 111 serves as a condenser, and the waste heat supplying heat exchanger 81 serves as an evaporator.

Accordingly, the refrigerant is evaporated in the waste heat supplying heat exchanger 81, so that it is possible to provide an ever-constant heating performance regardless of changes in outdoor temperature.

On the other hand, if the air conditioner 100 is in a cooling operation, and the outdoor temperature is higher than a set temperature, as shown in FIG. 4, the heat medium introduced into the sub unit 80 through the unit connecting passage 54 from the main unit 60 passes through the waste heat supplying heat exchanger 81.

In the air conditioner 100, the four-way valve 122 is switched to a heating mode, thus the refrigerant compressed in the compressor 121 is re-introduced into the outdoor unit 120 through the four-way valve 122, the air conditioner connecting passage 103, the indoor heat exchanger 111, the indoor expansion device 112, and the air conditioner connecting passage 103.

At this time, the first heating on-off valve 126 is turned off, and the second heating on-off valve 130 and the cooling on-off valve 127 are turned on, thus the refrigerant re-introduced into the outdoor unit 120 passes through the outdoor heat exchanger 123.

The refrigerant that has passed through the outdoor heat exchanger 123 is introduced into the sub unit 80 through the air conditioner connecting passage 104.

At this time, in the sub unit 80, the on-off valve 90 is turned on, so the refrigerant introduced into the sub unit 80 passes through the waste heat supplying heat exchanger 81 and then enters the outdoor unit 120.

That is, if the air conditioner 100 is in a heating operation and the outdoor temperature is higher than a set temperature, the indoor heat exchanger 111 serves as a condenser, and the outdoor heat exchanger 123 and the waste heat supplying heat exchanger 81 serve as an evaporator.

The main unit temperature sensor 74 senses a temperature of the main unit heat medium passage 52, while the sub unit temperature sensor 92 senses temperature of the sub unit refrigerant passage 102 and the radiation passage 83.

The main unit temperature sensor 74 transmits a sensing signal to the main unit controller 73, and the main unit controller 73 controls the operation of the engine 62 or the like.

The sub unit temperature sensor 92 transmits a sensing signal to the sub unit controller 91, and the sub unit controller 91 controls the passages of the heat medium and the refrigerant by controlling the three-way valve 84, the on-off valve 90 and so on.

The cogeneration system in accordance with the invention has an advantage that a cogeneration section is divided into a main unit and a sub unit, and an engine and a generator are included in the main unit, to thus enable the main unit and the sub unit to be installed at different locations, so that the main unit can be installed on the ground floor or basement of a building to thus minimize building vibrations or noises generated by a load, and the sub unit can be installed near to an air conditioner to thus minimize the length of a refrigerant passage, thereby reducing the installation cost and the flow passage resistance.

Additionally, the sub unit can be installed on the roof, so that the radiation effect of a radiator installed on the sub unit can be enhanced.

Additionally, the waste heat recovered from the engine is supplied to the air conditioner through the waste heat supplying heat exchanger, so that the heating performance and efficiency can be maximized.

Additionally, in the case that the air conditioner is in a heating operation and the outdoor temperature is lower than a set temperature, the refrigerant is evaporated by the waste heat supplying heat exchanger, so that a constant heating performance can be obtained regardless of the outdoor temperature, and frost formation on an outdoor heat exchanger can be prevented.

## Claims

1. A cogeneration system, comprising:
an air conditioner having an indoor unit and an outdoor unit;
a main unit including a driving source for generating heat and a waste heat recovery device for recovering waste heat of the driving source; and
a sub unit installed between the air conditioner and the main unit, and including a waste heat supplying heat exchanger for supplying the heat recovered by the waste heat recovery device to the air conditioner.

2. The cogeneration system of claim 1, wherein the main unit and the sub unit are connected by a heat medium passage through which a heat medium transferring heat to the waste heat supplying heat exchanger from the waste heat recovery device can circulate.

3. The cogeneration system of claim 2, wherein the heat medium passage includes a main unit heat medium passage installed so as to pass through the waste heat recovery device within the main unit, a sub unit heat medium passage installed so as to pass through the waste heat supplying heat exchanger within the sub unit, and a unit connecting passage connecting the main unit heat medium passage and the sub unit heat medium passage.

4. The cogeneration system of claim 1 or 2, wherein the sub unit and the air conditioner are connected by a refrigerant passage through which a refrigerant transferring heat to the outdoor unit from the waste heat supplying heat exchanger can circulate.

5. The cogeneration system of claim 4, wherein the refrigerant passage includes a sub unit refrigerant passage installed so as to pass through the waste heat supplying heat exchanger within the sub unit, an air conditioner refrigerant passage installed so that the refrigerant can circulate through the air conditioner, and an air conditioner connecting passage connecting the sub unit refrigerant passage and the air conditioner refrigerant passage.

6. The cogeneration system of claim 5, wherein the sub unit refrigerant passage has a bypass passage for allowing the refrigerant to bypass the waste heat supplying heat exchanger during the cooling operation of the air conditioner, and
the bypass passage has a first check valve for preventing reverse flow of the refrigerant.

7. The cogeneration system of claim 5, wherein the sub unit refrigerant passage has a second check valve for preventing reverse flow of the refrigerant that has passed through the waste heat supplying heat exchanger.

8. The cogeneration system of claim 5, wherein the sub unit refrigerant passage has an on-off valve for preventing the refrigerant from being introduced into the waste heat supplying heat exchanger during the cooling operation of the air conditioner.

9. The cogeneration system of claim 1, wherein the sub unit has a radiator for radiating the heat recovered by the waste heat recovery device.

10. The cogeneration system of claim 1, wherein the main unit further includes a main unit controller for controlling the engine, and
the sub unit further includes a sub unit controller for controlling the passages of the heat medium and the refrigerant circulating in the sub unit.
